# EUROPEAN PATENT APPLICATION

(11) **EP 4 631 603 A1**
(43) Date of publication of application: **15.10.2025**
(21) Application number: 24020115.2
(22) Date of filing: 11.04.2024
(51) Int. Cl.: B01D 53/56, B01D 53/78, B01D 53/79, C10K 1/00, C10K 1/10

(54) **METHOD OF OPERATING A CEMENT MANUFACTURING PLANT**

(71) Applicant: Holcim Technology Ltd, 6300 Zug (CH)
(72) Inventor: Suter, Michael, 5113 Holderbank (CH); Richner, Thomas, 5113 Holderbank (CH); Roth, Andreas, 5113 Holderbank (CH)
(74) Representative: SONN Patentanwälte GmbH & Co KG

(57) **Abstract**

A method of operating a cement manufacturing plant, the plant comprising a preheater (2) for preheating cement raw meal, a cement kiln (1) for calcining preheated raw meal coming from the preheater (2), a flue gas treatment installation (4) for treating flue gas (19) coming from the cement kiln (1) by means of selective catalytic reduction, and a gasifier (6) for carrying out a gasification process that produces syngas (10) from a waste material (7), the method comprising:
- separating ammonia (11) from the syngas (10),
- introducing at least a partial amount of the ammonia (11) into the flue gas treatment installation (4) as a reductant in the selective catalytic reduction process and/or introducing at least a partial amount of the ammonia (11) into the preheater (2) as a reductant for a selective non-catalytic reduction process,
- recovering thermal energy (12) from the gasification process by means of a heat exchanger (27,28) and feeding said thermal energy (12) to the flue gas treatment installation (4) .

## Description

The invention refers to a method of operating a cement manufacturing plant and to a cement manufacturing plant comprising a preheater for preheating cement raw meal, a cement kiln for calcining preheated raw meal coming from the preheater, a flue gas treatment installation for treating flue gas coming from the cement kiln by means of selective catalytic reduction, and a gasifier for carrying out a gasification process that produces syngas from a waste material.

Traditional methods of cement production rely on fossil fuels, which not only contribute to environmental pollution but also present significant cost implications. The use of alternative fuels, such as waste materials, offers a potential solution to these issues. However, one of the primary concerns of utilizing alternative fuels is the variability in the composition of these waste materials. Plastics and biowaste can differ greatly in terms of their calorific value, moisture content, and ash properties. This variability can lead to fluctuations in the kiln's thermal performance, affecting the quality of the clinker produced.

The ash generated from burning waste materials can affect the chemical composition of the cement clinker. Elements such as chlorides, alkalis, and heavy metals present in the ash can alter the mineralogical characteristics of the clinker, potentially impacting the strength and durability of the cement.

Handling and feeding waste materials into the cement kiln is another operational challenge. Unlike traditional fossil fuels, which are relatively homogeneous and easy to handle, waste materials can be inconsistent in size, shape, and density. This requires adaptations in the material handling systems, including storage, feeding, and dosing equipment.

In order to improve the use of alternative fuels, in particular waste material, it has been suggested to integrate a gasifier into the cement manufacturing process for gasifying waste material to produce syngas, a cleaner, more efficient fuel for cement kilns. The use of a gasifier has the additional advantage of enabling energy recovery from biomass-based waste, such as wood, that would otherwise not be suitable for being used as a fuel in cement kilns.

However, nitrogen compounds in the waste material have proven problematic, since the nitrogen content is almost completely converted into NH₃ during gasification, which oxidizes to undesirable nitrogen oxides, when the syngas is subsequently used as a fuel in the cement kiln or in any other subsequent combustion process. In order to eliminate this problem, it has been suggested in EP 3293159 A1 to separate the NH₃ produced during gasification and use the same to remove the nitrogen oxides produced during the production of cement clinker.

Selective Catalytic Reduction (SCR) is a common technique used for this purpose. The principle of SCR involves using a reductant, typically ammonia or urea, which is injected into the flue gas stream before it passes over a catalyst. The catalyst facilitates a chemical reaction between the nitrogen oxides and the reductant, converting the NOx into nitrogen (N₂) and water vapor (H₂O), which are harmless and naturally occurring compounds.

SCR systems require operation within a specific temperature window to effectively reduce nitrogen oxides (NOx) emissions. This optimal temperature range can vary based on the type of catalyst used and other operational parameters. Maintaining the correct temperature is crucial for the efficiency of the SCR process. If the temperature is too low, the conversion of NOx is less efficient, leading to poor emission control and potential ammonia slip, where unreacted ammonia is emitted. On the other hand, temperatures that are too high can lead to the degradation of the catalyst, reducing its effectiveness and lifespan.

To manage these temperature requirements, SCR systems are often equipped with mechanisms for temperature control, such as heat exchangers or bypass arrangements. These systems help in maintaining the flue gas temperature within the range that ensures optimal catalyst performance and effective NOx reduction. In cement manufacturing plants, the SCR unit is typically arranged as part of the cement kiln's flue gas handling system, which comprises a gas conditioning tower that is used to cool and condition the gas before it enters the dust collection system. The SCR unit is usually located downstream of the gas conditioning tower and the dust collection system, where the flue gas has lost much of its thermal energy. Therefore, external thermal energy is often required in order to raise the temperature to the level required for an efficient performance of the SCR unit.

In light of these challenges, there is a need for an improved method of operating a cement manufacturing plant. Such a method shall allow for the efficient use of waste materials as alternative fuels, while addressing the issues associated with undesired components like ammonia and the need for thermal energy for the flue gas treatment installation.

In order to solve these and other objects, the invention provides a method of operating a cement manufacturing plant, the plant comprising a preheater for preheating cement raw meal, a cement kiln for calcining preheated raw meal coming from the preheater, a flue gas treatment installation for treating flue gas coming from the cement kiln by means of selective catalytic reduction, and a gasifier for carrying out a gasification process that produces syngas from a waste material, the method comprising:
- separating ammonia from the syngas,
- introducing at least a partial amount of the ammonia into the flue gas treatment installation as a reductant in the selective catalytic reduction process and/or introducing at least a partial amount of the ammonia into the preheater as a reductant for a selective non-catalytic reduction process,
- recovering thermal energy from the gasification process by means of a heat exchanger and feeding said thermal energy to the flue gas treatment installation.

The method of the invention efficiently integrates the processes of syngas production, ammonia separation, and flue gas treatment. By separating ammonia from the syngas and employing it as a reductant in the selective catalytic reduction (SCR) process or in a selective non-catalytic reduction (SNCR) process in the preheater, the invention not only mitigates the issue of ammonia disposal but also enhances the efficiency of the emission control system. Additionally, by recovering and utilizing the thermal energy from the gasification process in the flue gas treatment installation, the invention significantly improves the overall energy efficiency of the cement manufacturing process.

Preferably, the step of separating ammonia from the syngas is carried out by a wet scrubbing process. A wet scrubbing process is based on the fact that ammonia is highly soluble in water, so that passing the syngas through a water bath can effectively remove ammonia. The process involves cooling the gas and contacting it with water under pressure, allowing ammonia to dissolve into the water. Subsequently, ammonia may be recovered from the water by known methods. Alternatively, an acid scrubbing process may also be used. Acid scrubbing involves passing the syngas through an acidic solution, commonly sulfuric acid, which reacts with ammonia to form ammonium sulfate.

The SCR- and SNCR- process is used for the reduction of NOx and other undesired compounds in the flue gas of the cement kiln. The ammonia separated from the syngas may be used either in a SCR- or in a SNCR-process or both, in a SCR- and in a SNCR-process. In the SNCR process, ammonia is injected into the combustion gases present in the preheater, where the temperature is typically between 850°C and 1100°C. At these temperatures the reaction of ammonia with NOx to form nitrogen and water vapor does not need any catalyst. In contrast, the SCR process involves a catalyst to facilitate the reaction between ammonia and NOx and is carried out in the flue gas treatment installation of the cement manufacturing plant. In the SCR process, ammonia is injected into the flue gas stream before it passes through a catalyst bed. The presence of the catalyst allows the reaction to occur at lower temperatures compared to SNCR, but the required temperature level still necessitates external thermal energy to be added to the process, considering that the flue gas usually has a temperature of only about 150°C or lower before it is released into the environment through the exhaust stack.

According to the invention, the thermal energy needed for this purpose is taken from the gasification process by means of a heat exchanger. Preferably, the heat exchanger is used to transfer heat from the gasification process to a heat-carrier fluid, such a s thermal oil, which is transported to the flue gas treatment installation, where another heat exchanger is used to transfer thermal energy from the heat-carrier fluid to the flue gas treatment installation. Thermal energy transfer to the flue gas treatment installation may be carried out in various ways. Preferably, the step of feeding thermal energy to the flue gas treatment installation comprises heating the flue gas before it enters the flue gas treatment installation. In this embodiment, a heat exchanger may preferably be used which transfers thermal energy from the heat-carrier fluid to the flue gas. Alternatively, the step of feeding thermal energy to the flue gas treatment installation comprises heating a catalyst of the flue gas treatment installation. Here, the catalyst is directly heated for example by using a heat exchanger that is arranged in heat exchange connection with the catalyst, e.g. by means of heat exchanger coils extending through the catalyst.

The extraction of thermal energy from the gasification process may preferably be carried out by recovering thermal energy from the syngas withdrawn from the gasifier by means of a heat exchanger. The heat exchanger may be used to transfer thermal energy from the syngas to a heat-carrier fluid, such as a thermal oil.

In order to further enhance the integration of the gasification process into the cement manufacturing process, a preferred embodiment of the invention provides that solid residues, such as ash or biochar, produced by the gasifier are added to the cement raw meal and/or to cement produced by the cement manufacturing plant. Biochar is obtained when the gasifier is operated in a reduced oxygen atmosphere, and may be utilized in cement mixtures either as a filler or as a partial substitute for cement. When used as a filler, biochar contributes to the bulk of the concrete without significantly affecting its mechanical properties. Its porous structure can improve the workability and water retention of the cement mix. On the other hand, substituting a portion of cement with the obtained ash or biochar can reduce the overall environmental impact of concrete production. Cement manufacturing is energy-intensive and a major source of CO₂ emissions; thus, replacing some cement with the obtained ash or biochar reduces both energy use and carbon footprint.

The waste material to be gasified may be wood, plastics, biomass, or mixtures thereof.

Preferably, a dual fluidized bed gasification system may be used as said gasifier, which comprises a gasification zone fluidized with steam and a combustion zone fluidized with air and a bed material circulating between the gasification zone and the combustion zone, wherein the circulating bed material acts as heat carrier from the combustion to the gasification zone. An example of a dual fluidized bed gasification system is a Fast Internally Circulating Fluidized Bed (FICFB) gasifier.

In a FICFB gasifier, biomass is fed into the gasification zone where it is thermochemically converted to syngas through contact with the hot fluidized bed material and steam. The bed material and the remaining char are transported to the combustion side by gravity where air is injected and the char is combusted to heat the bed material. The hot bed material is lifted up the riser with the combustion off-gases into a cyclone where the bed material and off-gases are separated. The re-heated bed material is reintroduced into the fluidized bed gasification chamber while the off-gases are withdrawn from the combustion zone.

According to a preferred embodiment of the invention, off-gas withdrawn from the combustion zone may be added to the flue gas coming from the cement kiln upstream of the flue gas treatment installation. Preferably, the off-gas may be added to the flue gas at an introduction point that is downstream of the gas conditioning tower and upstream of the dust collection system of the cement manufacturing plant. By merging the flue gas stream coming from the cement kiln and the preheater and the off-gas stream coming from the gasifier, the embodiment ensures that both gas streams can be treated simultaneously using the plant's existing flue gas treatment infrastructure. This co-treatment approach enhances overall efficiency, as it consolidates the treatment of different emission sources, thereby optimizing the use of space and resources within the plant.

In addition to recovering thermal energy from the syngas, as described above, thermal energy may also be recovered from the off-gas from the gasifier. In this connection, a preferred embodiment of the invention provides for recovering thermal energy from the off-gas withdrawn from the combustion zone by means of a heat exchanger and feeding said thermal energy to the flue gas treatment installation. The heat exchanger may be used to transfer thermal energy from the off-gas to a heat-carrier fluid, such as a thermal oil that is used for heating the catalyst of the flue gas treatment installation or for heating the flue gas before it enters the flue gas treatment installation.

According to a preferred embodiment of the invention, the syngas may be used as a fuel in the cement kiln for calcining the preheated raw meal, and/or as a fuel in a device for the heat treatment of clays to produce a calcined clay, and/or as a fuel for the heat treatment of concrete demolition waste to produce activated recycled concrete fines. The syngas obtained from the gasifier may typically contain carbon monoxide and hydrogen as well as additional components, such as small amounts of carbon dioxide, methane, water vapor and/or nitrogen, and is therefore suitable for being used as a synthetic fuel in the cement manufacturing plant.

According to a second aspect, the invention refers to a cement manufacturing plant comprising a preheater for preheating cement raw meal, a cement kiln for calcining preheated raw meal coming from the preheater, a flue gas treatment installation for treating flue gas coming from the cement kiln by means of selective catalytic reduction, and a gasifier for carrying out a gasification process that produces syngas from a waste material, said gasifier being connected to a separating device for feeding syngas to the separating device, wherein the separating device is designed for separating ammonia from the syngas, said separating device being connected to the flue gas treatment installation for introducing at least a partial amount of the ammonia into the flue gas treatment installation as a reductant in the selective catalytic reduction process and/or said separating device being connected to the preheater for introducing at least a partial amount of the ammonia into the preheater as a reductant for a selective non-catalytic reduction process, and wherein a heat exchanger is provided for recovering thermal energy from the gasification process and for feeding said thermal energy to the flue gas treatment installation.

Preferably, the heat exchanger is arranged to transfer the thermal energy to the flue gas before it enters the flue gas treatment installation.

Preferably, the heat exchanger is arranged to transfer the thermal energy to a catalyst of the flue gas treatment installation.

Preferably, the gasifier comprises an outlet for withdrawing solid residues, such as biochar, produced by the gasifier, said solid residues being fed to a mixing installation for mixing the solid residues with cement raw meal and/or with cement produced by the cement manufacturing plant.

Preferably, said gasifier is designed as a dual fluidized bed gasification system, which comprises a gasification zone fluidized with steam and a combustion zone fluidized with air and a bed material circulating between the gasification zone and the combustion zone.

Preferably, off-gas withdrawn from the combustion zone of said gasifier is added to the flue gas coming from the cement kiln upstream of the flue gas treatment installation.

Preferably, the plant further comprises a heat exchanger for recovering thermal energy from the off-gas withdrawn from the combustion zone of said gasifier and being arranged for feeding said thermal energy to the flue gas treatment installation.

Preferably, said separating device is designed as a wet scrubbing device.

Preferably, the syngas is used as a fuel in the cement kiln for calcining the preheated raw meal, and/or as a fuel in a device for the heat treatment of clays to produce a calcined clay, and/or as a fuel for the heat treatment of concrete demolition waste to produce activated recycled concrete fines.

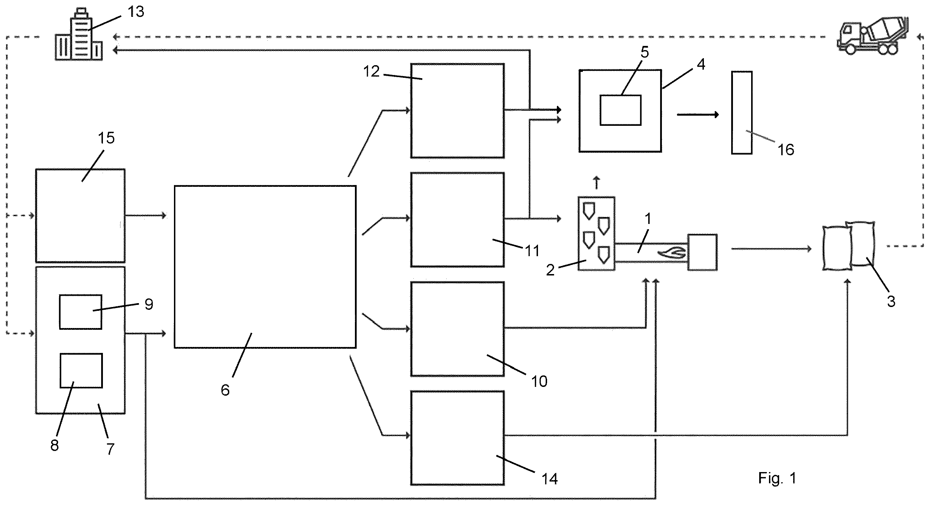

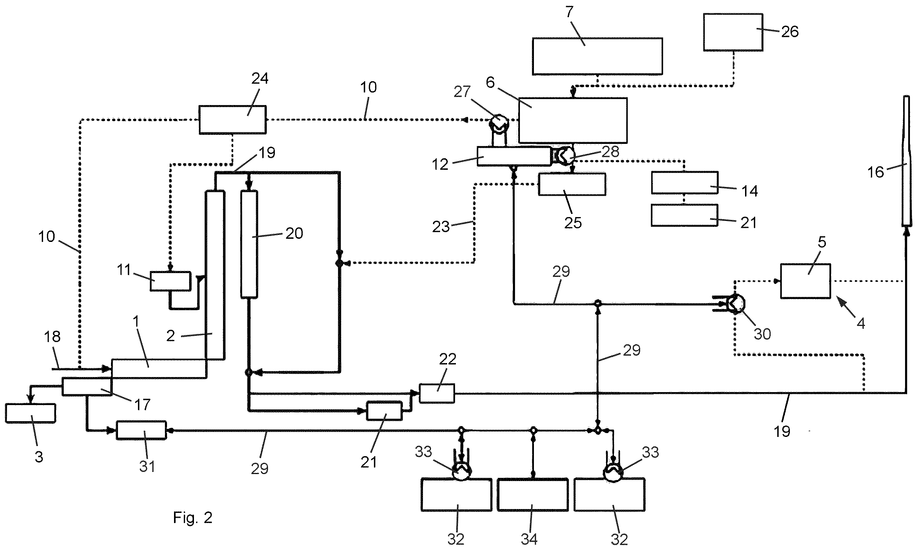

In the following, the invention will be described in more detail with reference to exemplary embodiments shown in the drawing. Therein, Fig. 1 shows a schematic illustration of a cement manufacturing plant according to the invention and Fig. 2 shows a detailed layout of a cement manufacturing plant according to the invention.

Fig. 1 shows a cement manufacturing plant comprising a cement kiln 1 and a preheater tower 2 for producing cement 3. Flue gas emitted from the preheater tower 2 is fed to a flue gas treatment installation 4 before it is released into the environment through an exhaust stack 16. The flue gas treatment installation 4 comprises a catalyst 5 for carrying out a selective catalytic reduction of nitrogen oxides contained in the flue gas.

Further, the cement manufacturing plant comprises a gasifier 6, in which waste material 7, such as waste wood 8 and/or waste plastic 9, is gasified for producing syngas 10. As shown in Fig. 1, waste material 7 may also be used as an alternative fuel in the cement kiln 1. The syngas 10 may be used as a fuel for calcining cement clinker in the cement kiln 1. Ammonia 11 contained in the syngas is separated therefrom and is introduced into the preheater tower 2 as a reductant for a selective non-catalytic reduction process and/or into the flue gas treatment installation 4 as a reductant in the selective catalytic reduction process. Further, thermal energy 12 recovered from the gasification process is transferred to the selective catalytic reduction process, in order to raise the temperature of the flue gas and/or the catalyst 5. Excess thermal energy 12 may optionally also be provided to a district heating system that supplies buildings 13 with heat.

The solid residues 14, such as ash or biochar, produced by the gasifier 6 are added to the cement 2 produced by the cement manufacturing plant.

As shown, the invention additionally supports circular economy processes by reusing concrete that was used for erecting buildings 13. Construction demolition waste 15 that is obtained from demolishing buildings 13 may be recycled by processing them in the gasifier 6. In this process, the cement paste fraction of the construction demolition waste is thermally activated, and results in the production of an activated mineral component which has pozzolanic reactivity and can thus be used in cement compositions to substitute Portland clinker.

Fig. 2 is a more detailed illustration of a cement manufacturing plant according to the invention. The cement manufacturing plant comprises a cement kiln 1, a preheater tower 2 and a clinker cooler 17, from which clinker 3 is withdrawn. The burner of the cement kiln 1 is operated with a fuel 18, such as a waste material based fuel, e.g. lignite, plastics, solvents, waste oil and/or used coke, which is mixed or separately introduced with syngas 10 coming from the gasifier 6. The flue gas emitted by the cement kiln 1 is used to preheat cement raw meal in the preheater tower 2. The flue gas 19 leaving the preheater tower 2 is cooled in a flue gas conditioning tower 20 and may be guided through a bypass for drying cement raw meal in a raw meal mill 21. Subsequently, dust is withdrawn from the flue gas in a filter 22. At least a partial amount of the flue gas 19 is subjected to a selective catalytic reduction process comprising a catalyst 5 for removing nitrogen oxides contained in the flue gas 19. The purified flue gas is released into the environment through the exhaust stack 16.

A gasifier 6 is used to subject waste material 7, such as waste wood 8 and/or waste plastic 9, to a gasification process, which produces syngas 10, solid residues 14 and an off-gas 23. A waste material based fuel 26, such as waste oil, may be used as a control fuel for the gasification process in order to maintain or control the temperature and stability of the combustion process within the system. The syngas 10 is subjected to an ammonia separation step in a separating device 24. The purified syngas 10 is used as a fuel for calcining cement clinker in the cement kiln 1 as described above. Ammonia 11 is introduced into the preheater tower 2 as a reductant for a selective non-catalytic reduction process to reduce the NOx content of the flue gas.

The gasifier 6 is designed as a dual fluidized bed gasification system, which comprises a gasification zone fluidized with steam and a combustion zone fluidized with air and a bed material circulating between the gasification zone and the combustion zone. Off-gas 23 withdrawn from the combustion zone is subjected to a HCl separation 25 for removing HCl, which originates from the chlorine content in the gasifier feedstock. During gasification, chlorine in the biomass is converted into hydrochloric acid gas, which may be removed from the off-gas 23 by means of a scrubbing process. The off-gas is then added to the flue gas 19. The solid residues 14, such as ash or biochar, may be added to the raw meal mill 21, or to a cement mill.

Thermal energy 12 is withdrawn from the syngas 10 and from the off-gas 23 by means of heat exchangers 27 and 28 and is distributed by a thermal energy distribution system 29 comprising circulating thermal oil. In this way, thermal energy 12 can be transferred to the flue gas 19 by means of a heat exchanger 30 before the fuel gas 19 is subjected to selective catalytic reduction in the catalyst 5. The thermal energy distribution system 29 can also be used to recover thermal energy from the waste gas coming from the clinker cooler 17, wherein a waste heat recovery device is denoted by reference numeral 31. Thermal energy may also be added to the thermal energy distribution system 29 from other heat sources, such as a light oil burner 34 or district heating 32 by means of heat exchangers 33.

In the following examples, test results are provided from tests that were conducted with different types of waste material as feedstock for the gasifier.

Example 1: Pure (paste) wood was used as feedstock for the gasifier. The syngas composition was determined as follows:

| | % | Nm3/h | kmol/h |
|---|---|---|---|
| H2O Vol% wet | 7.5 | '470 | 21.0 |
| Gas Volume dry | | 5'791 | 258.4 |
| H2 Vol% dry | 38 | 2'201 | 98.2 |
| CO Vol% dry | 25 | 1'448 | 64.6 |
| CH4 Vol% dry | 11 | '637 | 28.4 |
| CxHy Vol% dry | 2.5 | '145 | 6.5 |
| CO2 Vol% dry | 21 | 1'216 | 54.3 |
| N2 Vol% dry | 2.4 | '139 | 6.2 |

| | | | |
|---|---|---|---|
| Hu MJ/Nm3_wet 11.5 | | | |

Example 2: Pure SRF (solid recovered fuel) from plastic recycling was used as feedstock for the gasifier. The syngas composition was determined as follows:

| | % | Nm3/h | kmol/h |
|---|---|---|---|
| H2O Vol% wet | 7.5 | '333 | 14.9 |
| Gas Volume dry | | 4'111 | 183.4 |
| H2 Vol% dry | 46 | 1'891 | 84.4 |
| CO Vol% dry | 8 | '329 | 14.7 |
| CH4 Vol% dry | 22 | '904 | 40.4 |
| CxHy Vol% dry | 5 | '206 | 9.2 |
| CO2 Vol% dry | 16 | '658 | 29.4 |
| N2 Vol% dry | 3 | '123 | 5.5 |

| | | | |
|---|---|---|---|
| Hu MJ/Nm3_wet 16.2 | | | |

Example 3: 30% of biomass and 70% of plastic was used as feedstock for the gasifier. The syngas composition was determined as follows:

| | % | Nm3 /h | kmol /h |
|---|---|---|---|
| Gas Volume wet | | 4'827 | 215.4 |
| H20 Vol %wet | 7.4 | '357 | 15.9 |
| H2 Vol %wet | 36.9 | 1'781 | 79.5 |
| CO Vol %wet | 15.1 | '729 | 32.5 |
| CH4 Vol %wet | 16.6 | '801 | 35.8 |
| CxHy Vol %wet | 5.9 | '285 | 12.7 |
| CO2 Vol %wet | 15.8 | '763 | 34.0 |
| N2 Vol %wet | 2.4 | '116 | 5.2 |

| | | | |
|---|---|---|---|
| Hu MJ /Nm3_wet 15.3 | | | |

## Claims

1. A method of operating a cement manufacturing plant, the plant comprising a preheater (2) for preheating cement raw meal, a cement kiln (1) for calcining preheated raw meal coming from the preheater (2), a flue gas treatment installation (4) for treating flue gas (19) coming from the cement kiln (1) by means of selective catalytic reduction, and a gasifier (6) for carrying out a gasification process that produces syngas (10) from a waste material (7), the method comprising:
- separating ammonia (11) from the syngas (10),
- introducing at least a partial amount of the ammonia (11) into the flue gas treatment installation (4) as a reductant in the selective catalytic reduction process and/or introducing at least a partial amount of the ammonia (11) into the preheater (2) as a reductant for a selective non-catalytic reduction process,
- recovering thermal energy (12) from the gasification process by means of a heat exchanger (27,28) and feeding said thermal energy (12) to the flue gas treatment installation (4) .

2. Method according to claim 1, wherein said step of feeding thermal energy to the flue gas treatment installation (4) comprises heating the flue gas (19) before it enters the flue gas treatment installation (4).

3. Method according to claim 1 or 2, wherein said step of feeding thermal energy (12) to the flue gas treatment installation (4) comprises heating a catalyst (5) of the flue gas treatment installation (4).

4. Method according to claim 1, 2 or 3, wherein solid residues (14), such as ash or biochar, produced by the gasifier (6) are added to the cement raw meal and/or to cement (3) produced by the cement manufacturing plant.

5. Method according to any one of claims 1 to 4, wherein wood (8), plastics (9), biomass, or mixtures thereof are used as the waste material (7).

6. Method according to any one of claims 1 to 4, wherein a dual fluidized bed gasification system is used as said gasifier (6), which comprises a gasification zone fluidized with steam and a combustion zone fluidized with air and a bed material circulating between the gasification zone and the combustion zone.

7. Method according to claim 6, wherein off-gas (23) withdrawn from the combustion zone is added to the flue gas (19) coming from the cement kiln (1) upstream of the flue gas treatment installation (4).

8. Method according to claim 6 or 7, further comprising recovering thermal energy (12) from the off-gas (23) withdrawn from the combustion zone by means of a heat exchanger (28) and feeding said thermal energy (12) to the flue gas treatment installation (4).

9. Method according to any one of claims 1 to 8, wherein said step of separating ammonia (11) from the syngas (10) is carried out by a wet scrubbing process.

10. Method according to any one of claims 1 to 9, wherein the syngas (10) is used as a fuel in the cement kiln (1) for calcining the preheated raw meal, and/or as a fuel in a device for the heat treatment of clays to produce a calcined clay, and/or as a fuel for the heat treatment of concrete demolition waste to produce activated recycled concrete fines.

11. A cement manufacturing plant comprising a preheater (2) for preheating cement raw meal, a cement kiln (1) for calcining preheated raw meal coming from the preheater (2), a flue gas treatment installation (4) for treating flue gas coming from the cement kiln (1) by means of selective catalytic reduction, and a gasifier (6) for carrying out a gasification process that produces syngas (10) from a waste material (7), said gasifier (6) being connected to a separating device (24) for feeding syngas (10) to the separating device (24), wherein the separating device (24) is designed for separating ammonia (11) from the syngas (10), said separating device (24) being connected to the flue gas treatment installation (4) for introducing at least a partial amount of the ammonia (11) into the flue gas treatment installation (4) as a reductant in the selective catalytic reduction process and/or said separating device (24) being connected to the preheater (2) for introducing at least a partial amount of the ammonia (11) into the preheater (2) as a reductant for a selective non-catalytic reduction process, and wherein a heat exchanger (27,28) is provided for recovering thermal energy (12) from the gasification process and for feeding said thermal energy (12) to the flue gas treatment installation (4).

12. Cement manufacturing plant according to claim 11, wherein the heat exchanger (27) is arranged to transfer the thermal energy (12) to the flue gas (19) before it enters the flue gas treatment installation (4).

13. Cement manufacturing plant according to claim 11 or 12, wherein the heat exchanger (27) is arranged to transfer the thermal energy (12) to a catalyst (5) of the flue gas treatment installation (4).

14. Cement manufacturing plant according to any one of claims 11 to 13, wherein the gasifier (6) comprises an outlet for withdrawing solid residues (14), such as biochar, produced by the gasifier (6), said solid residues (14) being fed to a mixing installation for mixing the solid residues (14) with cement raw meal and/or with cement (3) produced by the cement manufacturing plant.

15. Cement manufacturing plant according to any one of claims 11 to 14, wherein said gasifier (6) is designed as a dual fluidized bed gasification system, which comprises a gasification zone fluidized with steam and a combustion zone fluidized with air and a bed material circulating between the gasification zone and the combustion zone.

16. Cement manufacturing plant according to claim 15, wherein off-gas (23) withdrawn from the combustion zone is added to the flue gas (19) coming from the cement kiln (1) upstream of the flue gas treatment installation (4).

17. Cement manufacturing plant according to claims 15 or 16, further comprising a heat exchanger (28) for recovering thermal energy (12) from the off-gas (2§) withdrawn from the combustion zone and being arranged for feeding said thermal energy (12) to the flue gas treatment installation (4).

18. Cement manufacturing plant according to any one of claims 11 to 17, wherein said separating device (24) is designed as a wet scrubbing device.

19. Cement manufacturing plant according to any one of claims 11 to 18, wherein the syngas (10) is used as a fuel in the cement kiln (1) for calcining the preheated raw meal, and/or as a fuel in a device for the heat treatment of clays to produce a calcined clay, and/or as a fuel for the heat treatment of concrete demolition waste to produce activated recycled concrete fines.
